# EUROPÄISCHE PATENTSCHRIFT

(11) **EP 0 492 312 B1**
(45) Veröffentlichungstag und Bekanntmachung des Hinweises auf die Patenterteilung: **08.03.1995**
(21) Anmeldenummer: 91121405.4
(22) Anmeldetag: 13.12.1991
(51) Int. Cl.: B60S 3/04

(54) **Eiskratze**
Ice scraper
Raclette à glace

(30) Priorität: 20.12.1990 DE 4041006
(43) Veröffentlichungstag der Anmeldung: 01.07.1992
(73) Patentinhaber: Schindler, Robert, D-70806 Kornwestheim (DE)
(72) Erfinder: Schindler, Robert, D-70806 Kornwestheim (DE)
(74) Vertreter: Meier, Robert, Dipl.-Ing.

(56) Entgegenhaltungen:
- DE-A- 2 911 934
- DE-A- 3 341 529
- US-A- 4 748 711

## Beschreibung

Die Erfindung bezieht sich auf eine Eiskratze zum Entfernen von Eis und Schnee an Kraftfahrzeugscheiben o. dergleichen.

Eine derartige Eiskratze nach dem Oberbegriff des Anspruchs 1 ist aus dem deutschen Patent DE-C-3 341 529 (C2) bekanntgeworden.

Obzwar diese bekannte Eiskratze gegenüber den zuvor bekannten Eiskratzen Vorteile aufweist, hat sich jedoch bei ihrem Gebrauch und bei ihrer Herstellung herausgestellt, daß Verbesserungen wünschenswert sind. So machte es beispielsweise Schwierigkeiten, die Seitenkanten der bekannten Eiskratze mit Gummilippen auszurüsten. Hinzu kam, daß ein sicherer Halt an einer Hand nicht immer gewährleistet war. Darüberhinaus waren hohe Formkosten aufzubringen und bei der Herstellung vieler der bekannten Eiskratzen machten sich hohe Materialkosten bemerkbar.

Demgegenüber liegt der vorliegenden Erfindung die Aufgabe zugrunde, eine Eiskratze mit geringem Kunststoffgewicht und einfacher Herstellung zu schaffen, die gleichwohl handkonform ist und gleich gut für Links- bzw. Rechtshänder geeignet ist. Zudem war gefordert, die Konstruktion so zu gestalten, daß an den Seitenkanten auf einfache Weise, wahlweise Kratzleisten, Abstreifkanten oder Gummilippen an dem Grundkörper der Eiskratze befestigt werden können.

Die Aufgabe wird durch die Merkmale des Anspruchs 1 gelöst.

Weitere Einzelheiten der Erfindung ergeben sich aus Unteransprüchen 2 bis 9.

Die neue Eiskratze weist viele Vorteile gegenüber der bekannten Eiskratze auf. Der vordere Randstreifen faßt die vorderen Teile der Oberschale und der Unterschale der Eiskratze sicher und stabil zusammen. Der Streifen überträgt ohne Beeinträchtigung der Eiskratze die beim Eiskratzen auftretenden Stöße auf den Körper der Eiskratze.

Das stumpfe Auslaufen der Seitenwände der Oberschale in den Seitenkanten der Unterschale gibt auf einfache Weise die Möglichkeit, in diese Kante und den dahinterliegenden Wulst Längsstreifen einzubringen, in die Einsteckstege von Gummilippen, Kratzleisten bzw. Abstreifkanten lösbar, jedoch sicher eingesetzt werden können. Von Vorteil ist auch die Ausbildung des Hohlkörpers. Die Unterschale ist zur Öffnung hin stärker als in ihrem Vorderteil gewölbt und geht außerhalb des Hohlkörpers in einen rückwärtigen Bereich über. Hierdurch ergibt sich ein sicherer Halt für die Finger und eine gute Auflage für den Handballen. Die Größe der Eiskratze ist so bemessen, daß sie gleich gut sowohl von kleineren wie auch größeren Händen betätigt werden kann. Durch die günstige Formgebung läßt sich mit einem geringen Kunststoffgewicht auskommen. Gegenüber den Formkosten zur Herstellung der bekannten Eiskratze lassen sich die Kosten für die Form zur Herstellung der neuen Eiskratze einsparen. Dadurch, daß an beiden Seiten der Eiskratze eine einfache Möglichkeit geschaffen ist, wahlweise Gummilippen, Kratzleisten bzw. Abstreifkanten einfach und sicher mit dem Körper der Eiskratze zu verbinden, wird diese gleich gut für Rechts- und Linkshänder brauchbar. Die Ausbildung der Unterschale gewährleistet gute Einsatzmöglichkeiten auch als Schneeschaufel.

Ein Ausführungsbeispiel der Erfindung wird nachfolgend anhand der Zeichnung beschrieben.

Es zeigt:
- Fig. 1: eine Draufsicht auf die Eiskratze,
- Fig. 2: eine Seitenansicht der Eiskratze nach Fig. 1,
- Fig. 3: einen Schnitt durch die Eiskratze entlang der Linie III-III in Fig. 1,
- Fig. 4: eine Vorderansicht der Eiskratze und
- Fig. 5: einen Schnitt entlang der Linie V-V in Fig. 1.

Die nachfolgende Beschreibung nimmt auf alle Figuren zugleich Bezug.

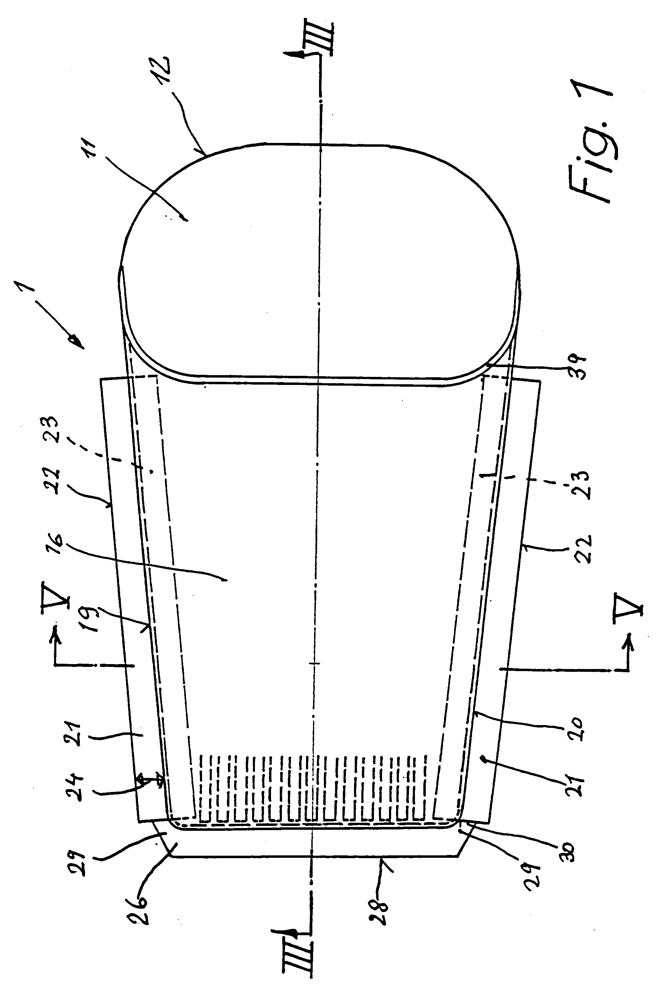

Die Eiskratze 1 besteht aus einem Hohlkörper 2 mit einer hinteren Öffnung 3, durch den gleich gut eine linke oder rechte Hand in den Hohlkörper 2 eingeführt werden kann. Der Hohlkörper erweitert sich von seinem in Fig. 1 links dargestellten vorderen Bereich zur Öffnung 3 hin.

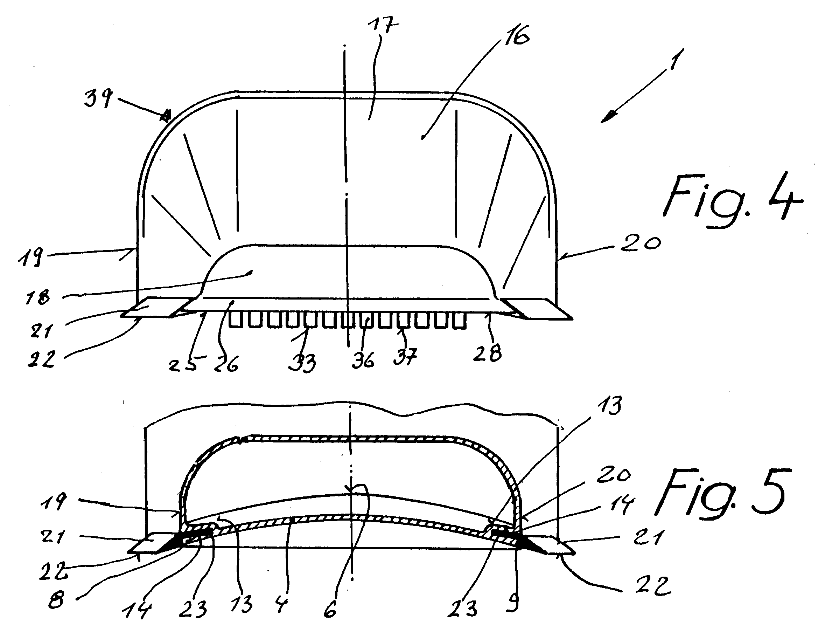

Nach unten begrenzt wird der Hohlkörper durch eine gewölbte Unterschale 4, deren First 6 vom vorderen Bereich an als Gerade gegenüber einer Grundebene 25 nach hinten hin ansteigt. Wie die Fig. 5 erkennen läßt, ist die Unterschale 4 unterschiedlich gewölbt. Im vorderen Bereich hat sie eine eher flache Wölbung, wohingegen im hinteren Bereich eine stärkere Wölbung vorgesehen ist.

Oberhalb der Unterschale 4 schließt der Hohlkörper mit einer Oberschale 16 ab, die vom vorderen Bereich der Eiskratze bis zum hinteren Bereich ansteigt. Die vordere Endwand 18 der Oberschale 16 läuft mit dem vorderen Randbereich 7 der Unterschale 4 zusammen, wobei ein vorderer Randstreifen 26 mit dreieckförmigem Querschnitt 27 und einer geraden Vorderkante 28 gebildet wird. Diese Zusammenführung der vorderen Endwand 18 der Oberschale 16 mit dem vorderen Randbereich 7 der Unterschale 4 bildet nicht nur eine sichere Verbindung der beiden Schalen, sondern überträgt auch die beim Eiskratzen auftretenden Stöße sicher in die Eiskratze 1.

Vor allem die Figuren 4 und 5 lassen erkennen, daß die Seitenwände 19 und 20 der Oberschale 16 zur Grundebene 25 im wesentlichen senkrecht verlaufen und stumpf auf die Seitenkanten 8 und 9 der Unterschale 4 aufstoßen. Fig. 5 zeigt, daß hinter den auf die Seitenkanten 8 und 9 aufst oßenden Seitenwände 19 und 20 Wülste 13 vorgesehen sind, die Längsschlitze 14 aufnehmen, in denen sicher, jedoch lösbar Einsteckstege 23 z.B. von Gummilippen 21 sitzen. Diese Gummilippen 21 weisen in üblicher Weise Abstreifkanten 22 auf. Infolge dieser sicheren Befestigung der Gummilippen 21 ist die neue Eiskratze 1 gleich gut für Linkshänder und Rechtshänder geeignet. Besser als bisherige Eiskratzen kann die neue Eiskratze zum Abstreifen von Schnee bzw. infolge der konvexen Wölbung der Unterschale auch zum Schneeschaufeln verwendet werden. Auf dieselbe Weise wie die Gummilippen können auch entsprechend geformte Kratzleisten oder Abstreifkanten in die Längsschlitze 14 eingesteckt werden.

Die Oberschale 16 endet in einer geneigten Ebene 40, die gegenüber der Grundebene 25 nach vorn geneigt ist. Innerhalb dieser Ebene verläuft ein hinterer Rand 39 der die Öffnung 3 umschließt.

Hinter der Öffnung 3 geht die Unterschale 4 in einen rückwärtigen Bereich 11 über, der von einem hinteren Rand 12 begrenzt ist. Dar hintere Rand 12 liegt in der Grundebene 25. Der First 6 der Unterschale steigt im wesentlichen als Gerade bis zur geneigten Ebene 40 an. Hinter dieser fällt der rückwärtige Bereich 11 bis zum hinteren Rand 12 ab. Dieser Bereich ist gewölbt. Die stärkste Wölbung der Unterschale liegt in der Ebene 40. Hierdurch ist eine besonders gute Auflage für den Ballen einer Hand gegeben.

Eine gute, handumspannende Form erhält die Eiskratze dadurch, daß die Seitenwände 19 und 20 im wesentlichen senkrecht zur Grundebene 25, die Querlinien des oberen Bereiches 17 der Oberschale 16 gleichlaufend zur Grundebene 25 angeordnet sind.

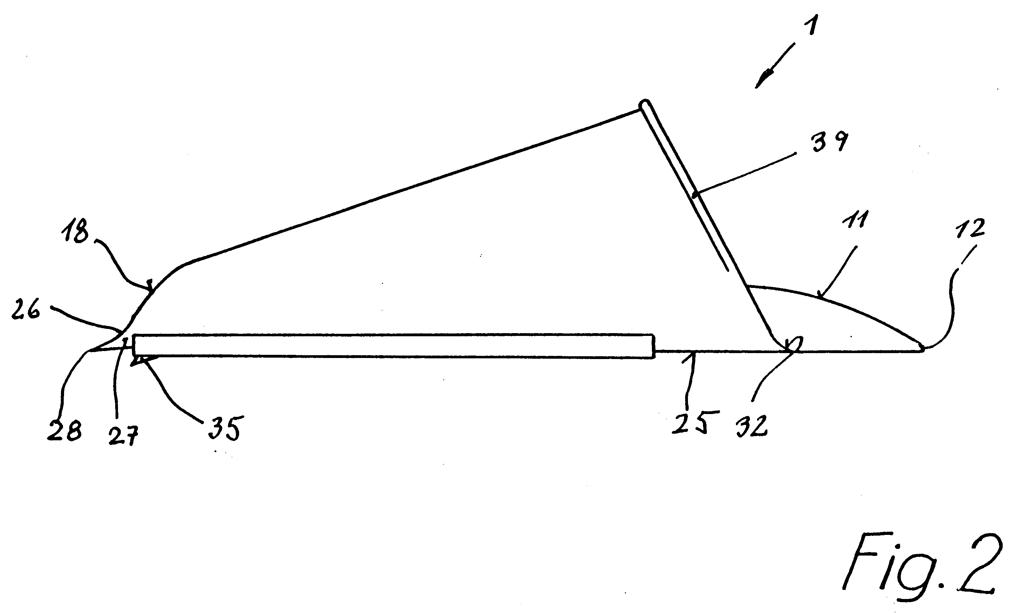

Der vordere Randstreifen 26 endet beidseitig, wie dieses vor allem die Fig. 1 erkennen läßt, in Übergangsstücken 29. Diese Übergangsstücke sind als Dreiecke ausgebildet, Ihre Basis 3o weist die halbe Höhe 24 einer Gummilippe auf. Auf diese Weise ist der Übergangsbereich zwischen dem vorderen Randstreifen 26 und den beiden Lippen 21 oder dergleichen sicher gestaltet. Fig. 2 läßt erkennen,daß der hintere Rand 39 der Oberschale 16 in den hinteren Rand 12 des rückwärtigen Bereiches 11 der Unterschale in Form von Bögen 32 übergeht.

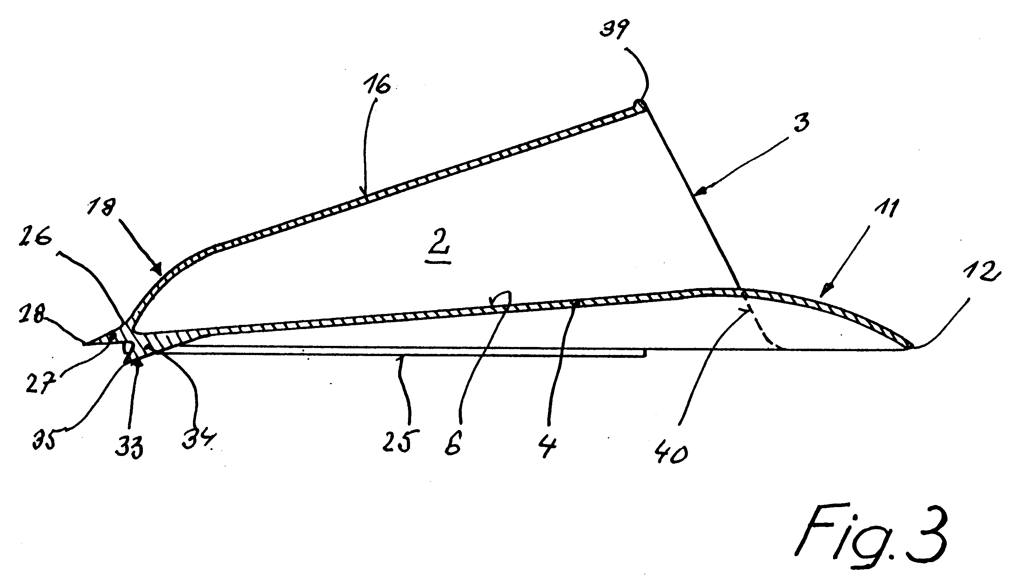

Von Bedeutung ist, daß gleichlaufend zum vorderen Randstreifen 26 ein Streifen 33 aus der Unterschale 4 austritt. Dieser Streifen 33 hat, wie vor allem Fig. 3 erkennen läßt, einen dreieckförmigen Querschnitt 34.Dieser ist so ausgebildet, daß die vordere Fläche des dreieckförmigen Querschnitts 34 zur Senkrechten einen Winkel von etwa 130° und die rückwärtige Fläche gegenüber einer Senkrechten einen Winkel von 100° einnimmt. Die Vorderkante 35 des Streifens 33 ist in einem bevorzugten Ausführungsbeispiel etwa 10 mm von der Vorderkante 28 des vorderen Randstreifens 26 entfernt.

In einem bevorzugten Ausführungsbeispiel verläuft die Vorderkante 35 des Streifens 33 etwa 4 mm unterhalb der Grundebene 25.

Von Vorteil ist, wenn eine der Vorderkanten 28 bzw. 35 als Kratzleiste mit einer Zahnung, die andere Kante als Abstreifkante ausgebildet ist.

Besondere Vorteile ergeben sich, wenn der Streifen 33 aus Einzelzähnen 36 besteht, von denen jeder eine Kratzkante 37 aufweist. Versuche haben ergeben, daß gute Kratzleistungen erzielt werden, wenn die Einzelzähne 36 eine Breite von 3 mm aufweisen, wobei zwischen den Einzelzähnen ein Zwischenraum von 2 mm offen ist. Die Kratzkanten 37 ragen nach unten aus der Grundebene 25 heraus. Keine Lackbeschädigungen treten beim Abstreifen des Schnee's von den Fahrzeugen auf, wenn Gummilippen 21 eingesetzt sind. Die erfindungsgemäße Eiskratze hat einen besonders guten Sitz, wenn man mit einem Handschuh hineinfährt.

## Patentansprüche

1. Eiskratze (1) zum Entfernen von Eis und Schnee an Kraftfahrzeugscheiben oder dergleichen, mit einem zumindest einen Teil der Hand umschließenden, nach hinten offenen und zur Öffnung (3) hin sich erweiternden Hohlkörper (2), der von einer gegenüber einer Grundebene (25) konvex nach oben gewölbten Unterschale (4) und einer gleichsinnig zu dieser konvex nach oben gewölbten Oberschale (16) begrenzt ist, wobei eine vordere Endwand (18) beziehungsweise Seitenwände (19,20) der Oberschale 16 und eine entsprechende Vorderkante (28) Beziehungsweise entsprechende Seitenkanten (8,9) der Unterschale (4) zu geraden, in der Grundebene (25) liegenden Kanten (28,8,9) zusammenlaufen, die zu einer vorderen und zwei seitlichen Kratzleisten (28) bzw. Abstreifkanten (22) ausbildbar sind,
gekennzeichnet durch die Kombination folgender Merkmale:
- Die Seitenwände (19,20) laufen stumpf in den entsprechenden Seitenkanten (8,9) der Unterschale (4) aus,
- die Seitenwände (19,20) laufen im Bereich der Seitenkanten (8,9) innerhalb des Hohlkörpers (2) in Wülsten (13) aus, in denen nach außen offene Längsschlitze (14) zur Aufnahme von Gummilippen (21-23), -leisten oder dergleichen vorgesehen sind,
- der die Öffnung (3) umschließende hintere Rand (39) der Oberschale (16) verläuft in einer zur Grundebene (25) nach vorn geneigten Ebene (40),
- der First (6) der Unterschale (4) steigt im wesentlichen als Gerade bis zu der Ebene (40) an,
- hinter der Ebene (40) weist die Unterschale (4) außerhalb des Hohlkörpers (2) einen rückwärtigen Bereich (11) auf, der bis zu einem in der Grundebene (25) liegenden hinteren Rand (12) abfällt.

2. Eiskratze nach Anspruch 1, dadurch gekennzeichnet, daß der rückwärtige Bereich (11) der Unterschale (4) gewölbt und ihr hinterer Rand (12) bogenförmig ausgebildet sind.

3. Eiskratze nach den Ansprüchen 1 und 2,
dadurch gekennzeichnet,
daß die Seitenwände (19, 20) der Oberschale (16) im wesentlichen senkrecht und ihr oberer Bereich (17) im wesentlichen gleichlaufend zur Grundebene (25) verlaufen.

4. Eiskratze nach den Ansprüchen 1 bis 3,
dadurch gekennzeichnet,
daß jeder Übergang zwischen dem hinteren Rand (39) der Oberschale (16) und dem hinteren Rand (12) der Unterschale (4) als Bogen (32) ausgebildet ist.

5. Eiskratze nach den Ansprüchen 1 bis 4,
dadurch gekennzeichnet,
daß ein vorderer Randstreifen (26) der Eiskratze (1) in der im wesentlichen geraden Vorderkante (20) ausläuft, an deren Enden sich Übergangsstücke (29) zu den Gummilippen (21) anschließen.

6. Eisknatze nach Anspruch 5,dadurch gekennzeichnet, daß die Übergangsstücke (29) als Dreiecke ausgebildet sind, deren Basis (30) der halben Höhe (24) der Gummilippen (21-23) bzw. -leisten oder dergleichen (21) entspricht.

7. Eiskratze nach den Ansprüchen 1 bis 16,
dadurch gekennzeichnet,
daß gleichlaufend zum vorderen Randstreifen (26) aus der Unterschale (4) ein weiterer Streifen (33) mit dreieckförmigem Querschnitt (34) und im wesentlichen gerader Vorderkante (35) aus der Grundebene (25) herausragt.

8. Eiskratze nach den Ansprüchen 1 bis 7,
dadurch gekennzeichnet,
daß eine der Vorderkanten (28, 35) als Kratzleiste, die andere als Abstreifkante ausgebildet ist.

9. Eiskratze nach den Ansprüchen 7 und 8,
dadurch gekennzeichnet,
daß der aus der Unterschale (4) herausragende Streifen (33) aus im Querschnitt dreieckförmigen Einzelzähnen (36) besteht, deren Kratzkanten (37) unterhalb der Grundebene (25) liegen.

## Claims

1. An ice scraper (1) for the removal of ice and snow from motor vehicle windows or the like, comprising a hollow part (2) enclosing at least a part of the user's hand, being open to the rear and expanding toward the opening (3) which hollow part is confined by a bottom cup (14) convex-curved upwardly vis-à-vis a basic plane and by an upper cup (16) convex-curved upwardly in the same direction as the bottom cup, with one forward end wall (18) or side walls (19,20) respectively, of the upper cup (16) and a corresponding front edge (28) or corresponding side edges (8,9), respectively, of the bottom cup (4) converging to straight-line edges (28,8,9) located in the base plane (25) which edges are capable of being formed to one front and two side scraping strips (28) and sweeping edges (22), respectively,
characterized by the combination of the folllowing features:
- the side walls (19,20) terminate at an obtuse angle in the corresponding side edges (8,9) of the bottom cup (4),
- the side walls (19,20) terminate in the area of the side edges (8,9) within the hollow part (2) in beads (13) in which outwardly open longitudinal slits (14) are provided for accommodating rubber lips, strips (21-25) or the like,
- the rear edge (39) of the upper cup (16) enclosing the opening (3) extends within a plane (40) forwardly inclined relative to the base plane (25),
- the ridge (6) of the lower cup (4) ascends substantially as a straight line up to the plane (40)
- behind the plane (40) the lower cup (4) externally of the hollow part (2) comprises a rear area (11) descending to a rear edge (12) located in the base plane (25).

2. An ice scraper according to claim 1,
characterized in
that the rearward area (11)
of the lower cup (4) is of a curved configuration and the rear edge thereof is of an arcuate design.

3. An ice scraper according to claims 1 and 2,
characterized in
that the side walls (19,20) of the upper cup (16) extend in a direction substantially vertical while the upper area (17) thereof extends in substantially the same direction to the base plane (25).

4. An ice scraper according to claims 1 to 3,
characterized in
that each transitional area between the rear edge (39) of the upper cup (16) and the rear edge (12) of the bottom cup (4) is of an arcuate (32) configuration.

5. An ice scraper according to any one of claims 1 to 4,
characterized in
that a front-sided marginal strip (26) of the ice scraper (1) terminates in the substantially straight-line front-sided edge (20) the ends of which are joined by transitional sections (29) leading to the rubber lips (21).

6. An ice scraper according to claim 5,
characterized in
that the transitional sections (29) are of a triangular configuration the basis (30) of which corresponds to half the height (24) of the rubber lips (21-23) or strips or the like.

7. An ice scraper according to claims 1 to 16,
characterized in
that another strip (33) of a triangular cross-section (34) and of a substantially straight-line front edge (35) protrudes concurrently with the front-sided marginal strips (26) from the bottom cup (4) out of the base plane (25).

8. An ice scraper according to claims 1 to 7,
characterized in
that one of the front-sided edges (28,35) is formed as a scraping strip while the other is formed as a sweeping edge.

9. An ice scraper according to claims 7 and 8,
characterized in
that the strip (33) protruding from the lower cup (4) is formed of individual teeth (33) of triangular cross-sections the scraping edges (37) of which are located below the base plane (25).

## Revendications

1. Grattoir (1) pour enlever de glaçon et de neige des glaces d'automobiles etc., comportant un corps creux (2) entourant au moins une partie de la main de l'usager, ouvert à l'arrière et s'étendant vers l'ouverture (3), le corps creux étant délimité par une coupe inférieure (4) convexe vers le haut vis-à-vis un plan de niveau (25) et par une coupe (16) supérieure de même sens et convexe vers le haut, une paroi d'extrémité avant (19) respectivement des parois latérales (19,20) de la coupe supérieure (16) et une arête avant correspondante respectivement des arêtes avants (8,9) de la coupe inférieure (4) convergeant dans des arêtes rectilignes disposées dans le plan de niveau formables à un liston-grattoir (28) avant et à deux listons-grattoirs latérales (28) respectivement arêtes-racloir (22),
caractérisé par la combinaison des caractéristiques comme suite:
- les parois latérales (19,20) s'écoulent à un angle obtus dans les parois latérales (8,9) correspondantes de la coupe inférieure (4),
- les parois latérales (19,20) s'écoulent dans la zone des arêtes latérales (8,9) dedans le corps creux (2) en renflements (13) dans lesquels sont prévu des fentes oblongues (14) ouvertes à l'extérieur pour receuillir des lèvres ou de listons de caoutchouc (21-23) etc.,
- l'arête arrière (39) de la coupe supérieure (16) enfermant l'ouverture (3) s'étend dans un plan (40) incliné au plan de niveau (25) en avant,
- le faite (6) de la coupe inférieure (4) ascend essentiellement comme ligne droite jusqu'au plan (40),
- derrière le plan (40) la coupe inférieure (4) à l'extérieure du corps creux (2) comporte une zone arrière (11) descendant jusq'une arête arrière (12) prévue dans le plan de niveau (25).

2. Grattoir selon la revendication 1,
caractérisé en ce
que la zone arrière (11) de la coupe inférieure (4) est courbée et l'arête arrière (12) est en forme d'arches.

3. Grattoir selon les revendications 1 et 3,
caractérisé en ce
que les parois latérales (19,20) de la coupe supérieure (16) s'étendent essentiellement verticalement et sa zone supérieure (17) s'étend essentiellement en même sens au plan de niveau (25).

4. Grattoir selon les revendications 1 à 3,
caractérisé en ce
que chaque zone de transition entre l'arête arrière (39) de la coupe supérieure (16) et l'arête arrière (12) de la coupe inférieure (4) est en forme d'arches (32).

5. Grattoir selon les revendications 1 à 4,
caractérisé en ce
qu'un liston marginale avant (26) du grattoir (1) s'écoule dans l'arête avant (20) essentiellement rectiligne dont les extrémités sont jointes par des sections de transition (29) amenant aux lèvres de caoutchouc (21).

6. Grattoir selon la revendication 5,
caractérisé en ce
que les sections de transition (29) sont formées comme des triangles dont la base (30) correspond à l'hauteur (24) demie des lèvres ou listons de caoutchouc (21-23) etc.

7. Grattoir selon les revendications 1 à 16,
caractérisé en ce
qu' un autre liston (33) d'une section (34) triangulaire et d'une arête avant (35) essentiellement rectiligne se fait saillie en même sens au liston marginale (34 avant de la coupe inférieure (4) du plan de niveau (25).

8. Grattoir selon les revendications 1 à 7,
caractérisé en ce
que l'une des arêtes avants (28,35) est formée comme liston de grattoir et l'autre est formée comme arête de racloir.

9. Grattoir selon les revendications 7 et 8,
caractérisé en ce
que le liston (33) se faisant saillie de la coupe inférieure (4) consiste de dents (36) individuels de section triangulaire dont les arêtes de grattoir (37) sont disposées au dessous du plan de niveau (25).
